# EUROPEAN PATENT APPLICATION

(11) **EP 0 910 162 A1**
(43) Date of publication of application: **21.04.1999**
(21) Application number: 98911209.9
(22) Date of filing: 03.04.1998
(51) Int. Cl.: H02M 7/757

(54) **TRANSFORMER TYPE CONVERTER**

(30) Priority: 03.04.1997 JP 99601/97
(71) Applicant: FANUC LTD, Minamitsuru-gun, Yamanashi 401-0597 (JP)
(72) Inventor: KONO, Shinichi, Room 7-203 Fanuc Manshion Harimomi, Minamitsuru-gun Yamanashi 401-0511 (JP); MAKITA, Hajime, Room 11-501 Fanuc Mans Harimomi, YamYamaanashi 401-0511 (JP)
(74) Representative: Billington, Lawrence Emlyn
(86) International application number: JP9801565
(87) International publication number: WO9844623

(57) **Abstract**

A transforming converter which does not need a transformer and is capable of performing a power regenerative operation. A smoothing capacitor C is connected to positive and negative terminals of a thyristor bridge (10R1, 10R2 ∼ 10T1, 10T2) via diodes (D1, D2) which are each connected in a forward direction. Cathode sides of the diodes (D1, D2) are connected with each other and anode sides thereof are connected with each other via switching devices (T1, T2), respectively. In a power running mode, the switching devices are turned off and phase-angle control of a thyristor inverter is performed to thereby obtain a DC power source of a voltage lower than the voltage of an AC power source. In a regenerative mode, the switching devices are turned on and phase-angle control of the thyristor is performed selecting those interphase voltages of the power source which are lower than the charge voltage of the smoothing capacitor, to thereby feed back regenerative energy to the power source.

## Description

### Technical Field

The present invention relates to a transforming AC/DC converter, and more specifically to the transforming converter for performing a regenerative operation when a output voltage exceeds a predetermined voltage due to regenerative energy.

### Background Art

A driving unit including a motor for a feed shaft of a machine tool or the like is provided with a inverter for performing a speed control of the motor. The inverter comprises a converter section for converting an AC voltage from a three-phase commercial power source to a DC voltage and an inverter section for converting the DC voltage, to obtain an alternate current having varied voltage and frequency.

In general, the converter converts an AC voltage to a DC voltage by full-wave rectification using a three-phase diode bridge circuit. Therefore, in operating the inverter unit with a power source of a high voltage exceeding a rated voltage, a transformer is connected to the external power source to reduce the voltage, and the reduced voltage is converted to a DC voltage by the converter section and inputted to the inverter section.

Thus, in order to operate the inverter with a source voltage exceeding its rated voltage, a transformer is necessary. The transformer has large weight and requires a large mounting area, and is troublesome in handling.

### Disclosure of Invention

An object of the present invention is to provide a transforming converter capable of reducing a source voltage without a transformer. A further object of the present invention is to provide a transforming converter for performing a power regenerative operation when an output voltage exceeds a set voltage due to regenerative energy.

According to an aspect of the invention, a transforming converter comprises a thyristor bridge circuit and control means for performing a phase-angle control of the thyristor bridge circuit so that a source voltage is converted to a DC voltage of a set value which is lower than the source voltage. The control means performs the phase-angle control of the thyristor bridge circuit so that the regenerative energy is successively fed back to phases of interphase voltages of an AC power source, which have values lower than the set value, when the DC voltage exceeds the set value due to the regenerative energy.

According to another aspect of the invention, a transforming converter comprises: a thyristor bridge circuit; a smoothing capacitor connected between a positive terminal and a negative terminal of the thyristor bridge circuit through two diodes respectively interposed in a current-flow allowing direction; switching devices respectively connected between cathodes of the two diodes and between anodes of the two diodes; and control means for controlling the thyristor bridge circuit and said switching devices. In the process of power running the control means turns off the switching devices and performs the phase-angle control of the thyristor bridge circuit so that a voltage between two terminals of the smoothing capacitor is maintained at a DC voltage of a set value, and in the process of regenerating the control means turns on the switching devices and performs the phase-angle control of the thyristor bridge circuit so that the regenerative energy is successively fed back to phases of interphase voltages of said AC power source, which have values lower than the set value.

The control means controls an electrical-angle command for the phase-angle control so that the DC voltage maintains the set value using a detected value of the DC voltage and a detected value of an elecric current flowing in the thyristor bridge circuit. At that time, the control means obtains a deviation of a detected value of the DC voltage from the set value thereof, obtains an electric current command by a proportional-plus-integral control and obtains an electrical angle command for the phase-angle control based on a difference between the obtained electric current command and a detected value of the electric current flowing in the thyristor bridge circuit.

The above control means may comprise a thyristor triggering circuit for selectively triggering thyristors in the thyristor bridge circuit, a controller for controlling a triggering operation of the thyristor triggering circuit and a switch driving circuit for controlling the switching devices.

### Brief Description of Drawings

FIG. 1 is a block diagram showing structure of a motor control circuit using a transforming converter according to one embodiment of the present invention;
FIG. 2 is a block diagram showing the phase-angle control of a thyristor bridge in the embodiment;
FIG. 3 is a flowchart of processing for the phase-angle control to be performed by a control circuit in the embodiment;
FIG. 4 is a diagram showing relationship between triggering timing for each thyristor and interphase voltages of a power source in a power running mode in the embodiment; and
FIG. 5 is a diagram showing relationship between triggering timing for each thyristor and interphase voltages of a power source in a regenerative mode in the embodiment.

### Best Mode of Carrying out the Invention

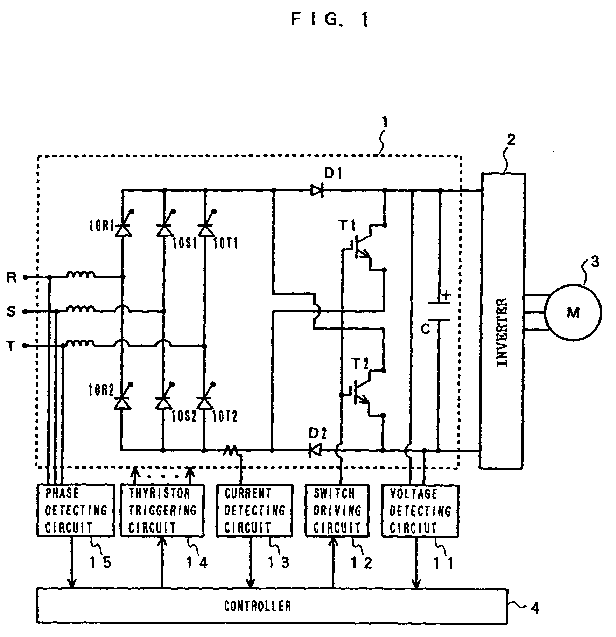

FIG. 1 shows a motor drive control circuit using a step-down transforming converter according to one embodiment of the invention.

Input terminals of a converter 1 are connected to an AC power source of three phases (R, S, T phases). Output terminals of the converter 1 are connected to an inverter 2, and output terminals of the inverter 2 are connected to a motor 3.

The converter 1 includes a thyristor bridge circuit including thyristors 10R1, 10R2, 10S1, 10S2, 10T1, 10T2, diodes D1, D2, switching devices T1, T2 such as IGBT's or the like, a smoothing capacitor C, a voltage detecting circuit 11 for detecting a DC voltage which is an output of the converter 1, a switching device drive circuit 12, a current detecting circuit 13, a thyristor triggering circuit 14, and an input three-phase phase detecting circuit 15 for detecting inputted phases of the AC three-phase power source.

An anode of the thyristor 10R1 is connected to a cathode of the thyristor 10R2, and a node in a series circuit including the thyristors 10R1, 10R2 is connected to the R phase of the three-phase AC power source. In the same way, a node in a similar series circuit including the thyristors 10S1, 10S2 and a node in a similar series circuit including the thyristors 10T1, 10T2 are connected to the S and T phases of the three-phase AC power source, respectively. The outputs of the cathodes of the thyristors 10R1, 10S1, 10T1 are supplied to the output terminal through the diode D1 which is connected in the forward direction, ad the outputs of the anodes of the thyristors 10R2, 10S2, 10T2 are supplied to the output terminal through the diode D2 which is connected in the forward direction. Between the output terminals is connected the smoothing capacitor C.

Between the respective cathode sides of the diodes D1, D2 is connected a switching device T1, and between the respective anode sides of the diodes D1, D2 is connected a switching device T2. The voltage detecting circuit 11 and the current detecting circuit 13 detect the output voltage (charge voltage of the capacitor C) and charge/discharge current of the capacitor C and supply them to the control unit 4, respectively. The output of the switching device drive circuit 12 is connected to respective gates of the IGBT's provided as the switching devices T1, T2 so that the switching device drive circuit 12 can turn the switching devices T1, T2 on or off in accordance with a signal from the control unit 4. The thyristor triggering circuit 14 is connected to respective gates of the thyristors 10R1, 10R2, 10S1, 10S2, 10T1, 10T2 so that the thyristor triggering circuit 14 can turn on the individual thyristors by performing phase-angle control of patterns as described later in accordance with a command from the control unit 4. The input three-phase phase detecting circuit 15 detects those phases of the AC three-phase power source which are inputted to the converter 1, and supplies them to the control unit 4.

The above described circuit structure of the converter 1 is known for a step-up converter which outputs voltage higher than the input voltage. Using such circuit structure, the present invention provides a converter which reduces the input voltage and outputs a low output voltage, and further provides a step-down converter which can feed back regenerative energy to the input power source.

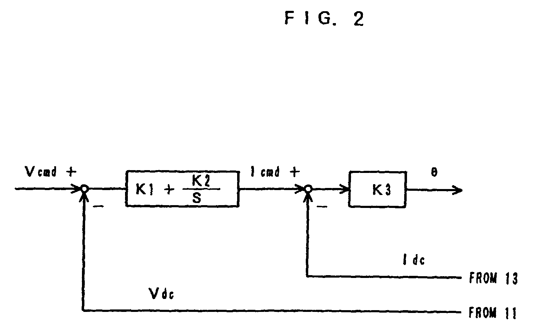

FIG. 2 is a block diagram showing control performed by the control unit 4 for controlling the converter. A DC voltage Vdc detected by the voltage detecting circuit 11 is subtracted from a command voltage Vcmd to thereby obtain a voltage deviation Vε. A value obtained by multiplying the voltage deviation Vε by a proportional gain K1 and a value obtained by accumulating the voltage deviation Vε and multiplying the accumulated value by an integral gain K2 are added to thereby obtain a current command Icmd. In other words, the current command Icmd is obtained by proportional-plus-integral feedback control of the command voltage. A current deviation Iε obtained by subtracting a current Idc detected by the current detecting circuit 13 from the current command Icmd is multiplied by a proportional gain K3 to thereby obtain a command electrical angle θ for conduction for a basic phase. Based on the command electrical angle θ, the control unit 4 controls conduction timing for each phase by a gate array circuit, ad controls the thyristor triggering circuit 14 to thereby trigger each thyristor. Phase-angle control is thus performed. The control system shown in FIG. 2 and the way of phase-angle control for triggering each thyristor are the same as conventional ones. The difference lies in that when the motor 3 is braked and a regenerative mode goes on, phase-angle control for feeding back regenerative energy to the power source is performed.

More specifically, when the DC voltage Vdc detected by the voltage detecting circuit 11 becomes higher than the predetermined command voltage Vcmd, the switching devices T1, T2 are turned on by the switching drive circuit 12, so that the thyristors are so triggered that regenerative energy is fed back to the power source.

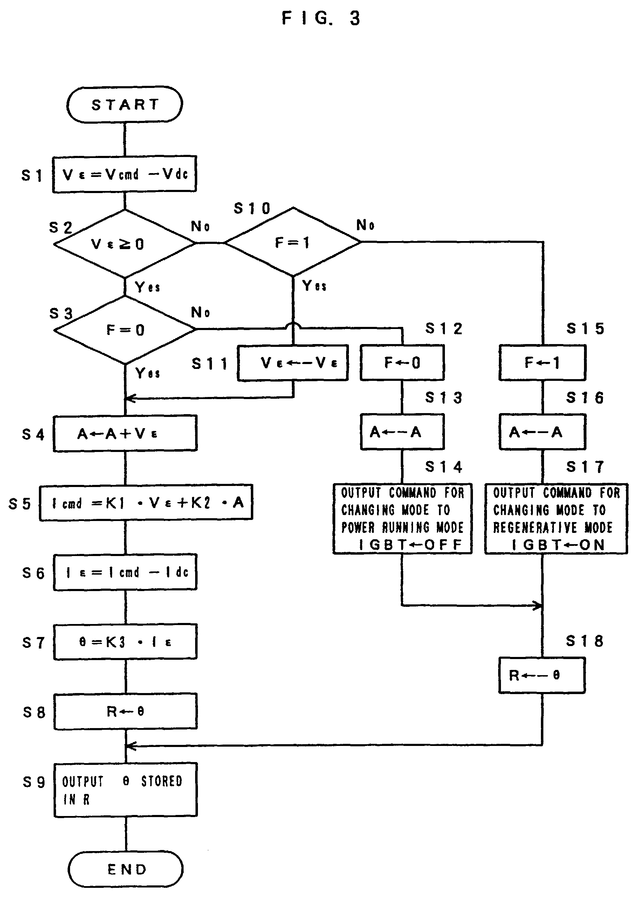

FIG. 3 is a flowchart of processing for converter control performed by a processor in the control unit 4 for controlling the motor 3. The processor of the control unit performs this processing in each predetermined period.

In initialization performed when the power source goes on, a flag F for indicating whether the present mode is a power running mode or a regenerative mode is set to "0", so that the power running mode is selected. An accumulator A for performing proportional-plus-integral feedback control of voltage is also set to "0", and a command for turning off the switching devices T1, T2 is outputted to the switching drive circuit 12.

When the processor starts processing, first a voltage deviation Vε is obtained by subtracting a DC voltage Vdc detected by the voltage detecting circuit 11 from a predetermined command voltage Vcmd (Step S1). Since the capacitor C is not charged at first, the detected voltage Vdc is "0".

Next, whether the voltage deviation Vε is "0" or larger or not is judged (Step S2). If the voltage deviation Vε is "0" or larger, then whether the flag F is "0" or not is judged (Step S3). Since the flag F is set to "0" at first, the processor goes to Step S4 and accumulates the voltage deviation Vε in the accumulator A for integral processing. Next, a value obtained by multiplying the voltage deviation Vε by a proportional gain K1 is added to a value obtained by multiplying the value memorized in the accumulator A by an integral gain K2, to thereby obtain a current command Icmd (Step S5). This processing in Step S5 is the above mentioned processing for feedback control of voltage. A DC current Idc detected by the current detecting circuit 13 is subtracted from the obtained current command Icmd to thereby obtain a current deviation Iε, and the current deviation Iε is multiplied by a current gain K3 to thereby obtain a basic electrical angle θ (Steps S6, S7). The obtained electrical angle θ is stored in a register R and outputted (Steps S8, S9). Thus, the processing in the present period ends.

Based on the thus obtained electrical angle θ and the phases of the power source detected by the phase detecting circuit 15, a thyristor triggering command for each phase is outputted by the gate array circuit to the thyristor triggering circuit 14 as in conventional cases, and the thyristor triggering circuit 14 successively triggers the thyristors, based on the triggering commands.

Then, as long as the voltage deviation Vε is not negative, the processing in Steps S1 to S9 is performed in each period, and the thyristors 10R1, 10R2, 10S1, 10S2, 10T1, 10T2 are triggered based on the command electrical angle θ in the way described later, so that the capacitor C is charged.

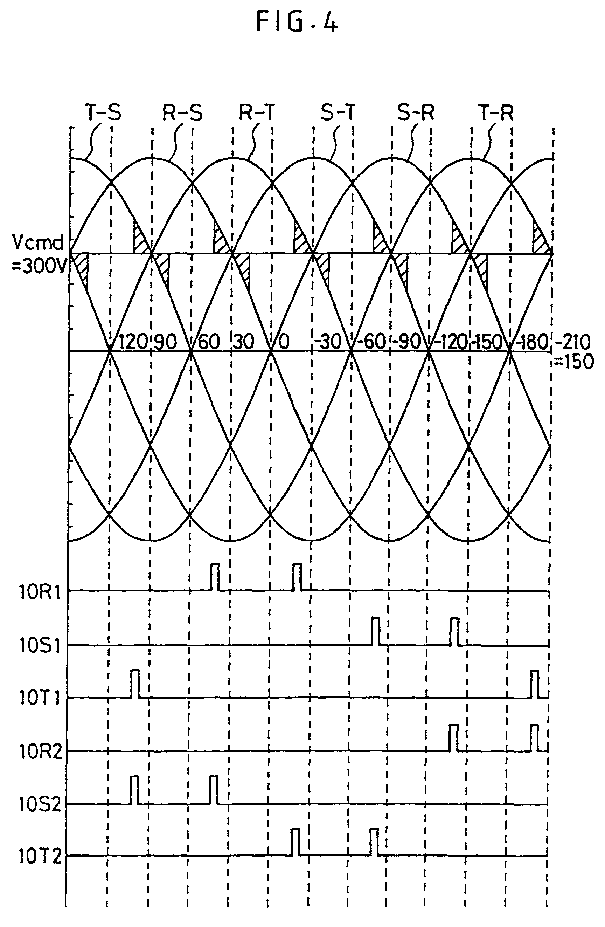

FIG. 4 shows relation between triggering timing for each thyristor, the output DC voltage ad the command voltage Vcmd at the time the detected DC voltage Vdc is equal to or lower than the command voltage Vcmd and the power running mode is going on.

In the present embodiment, the R-S interphase voltage, that is, the voltage between the R and S phases is selected as a basic interphase voltage, ad the command electrical angle θ obtained by the processor of the control unit 4 is a command for the R-S phase. FIG. 4 shows an example where the command voltage Vcmd is 300 V.

At first, since the charge voltage of the capacitor C is "0", the detected voltage is "0". Therefore, the voltage deviation Vε is a large positive value, and therefore, the command current Icmd and the command electrical angle θ are also large values. When the capacitor C is charged and the output voltage comes close to the command voltage Vcmd = 300 V, the voltage deviation Vε becomes small, and therefore, the command electrical angle θ becomes also small.

FIG. 4 shows a state where the command electrical angle θ is about 40 to 45 degrees. Supposing that the command electrical angle θ is 40 degrees in order to simplify the explanation, the thyristor triggering circuit 14 turns on the thyristors 10R1 10R2 at a point where the electrical angle θ = 40 degrees. Then, the current flows from the R phase terminal to the thyristor 10R1, the diode D1, the capacitor C, the diode D2, the thyristor 10S2 and the S phase terminal. Thus, the R-S interphase voltage is applied to the capacitor C. At the point where the electrical angle θ = 40 degrees, the R-S interphase voltage is higher than the charge voltage of the capacitor C, so that the capacitor C is charged. And even when the R-S interphase voltage becomes lower than the charge voltage of the capacitor C, the current continues flowing as shown in FIG. 4 due to energy stored in an inductance provided in the circuit. Then, an inverse voltage is applied to the thyristors 10R1, 10R2, so that the thyristors 10R1, 10S2 are turned off.

At a point of -20 degrees which shows a phase difference of 60 degrees relative to the command electrical angle for the R-S phase of 40 degrees, the thyristors 10R1, 10T2 are triggered, so that the R-T interphase voltage is applied to the capacitor C in the same way and the capacitor C is charged. At a point of -80 degrees which is further 60 degrees behind and shows a phase difference of 120 degrees relative to the command electrical angle θ, the thyristors 10S1, 10T2 are triggered, so that the S-T interphase voltage is applied to the capacitor C. After that, at each point which is 60 degrees behind the preceding point, the S-R interphase voltage, the T-R interphase voltage, the T-S interphase voltage and the R-S interphase voltage are successively applied to the capacitor C by triggering the thyristors 10S1, 10R2, the thyristors 10T1, 10R2, the thyristors 10T1, 10S2 and the thyristors 10R1, 10S2, respectively, and the capacitor C is charged.

When the detected voltage Vdc is lower than the command voltage Vcmd and the voltage deviation Vε is a large positive value, the electrical angle θ is large. In the example case of FIG. 4, the command electrical angle θ is larger than 30 degrees, and the capacitor C is charged with such electrical angle in order to reach the command voltage Vcmd = 300 V. As the detected voltage Vdc comes close to the command voltage Vcmd, the electrical angle θ becomes smaller. In the case where the command voltage Vcmd is 300 V, the electrical angle θ takes a value a little larger than 30 degrees. When the charge voltage of the capacitor C becomes lower than the command voltage Vcmd = 300 V due to a load driven by the motor 3, the voltage deviation Vε increases correspondingly, so that the electrical angle θ increases correspondingly. The capacitor C is charged with such increased electrical angle θ, so that the charge voltage Vdc of the capacitor C maintains the command voltage Vcmd.

On the other hand, when the motor M is decelerated, regenerative current is thereby produced, and the capacitor C is charged with the regenerative current, so that the detected voltage Vdc rises to exceed the command voltage Vcmd, the voltage deviation Vε calculated in Step S1 turns negative. Therefore, the processor goes from Step S2 to Step S10, and judges whether the flag F is "1" or not. Since the flag F is "0" at first, the processor goes to Step S15 and sets the flag F to "1" to change the mode to the regenerative mode, and reverses the sign of the accumulator A. Then, the processor outputs a command for changing the mode to the regenerative mode to the switching drive circuit 12 to thereby turns on the switching devices T1, T2 (Steps S15 to 17), so that the smoothing capacitor C is connected to the thyristor bridge circuit with its polarity reversed. Then, the processor reverses the sign of the trigger angle θ memorized in the register R (Step S18), and outputs the trigger angle θ (Step S9).

Suppose, for example, that when the detected voltage Vdc is a little lower than the command voltage Vcmd and the trigger angle θ is a little larger than 30 degrees (In order to simplify the explanation, the trigger angle will be hereinafter treated as that of 30 degrees.), the motor 4 is decelerated and regenerative current flows, so that the output voltage Vdc becomes equal to or higher than the command voltage. In this case, since the sign of the command trigger angle θ is reversed in Step S16, the command trigger angle of -30 degrees is outputted, and, for example, the thyristors 10R1, 10S2 are triggered at a point of -30 degrees.

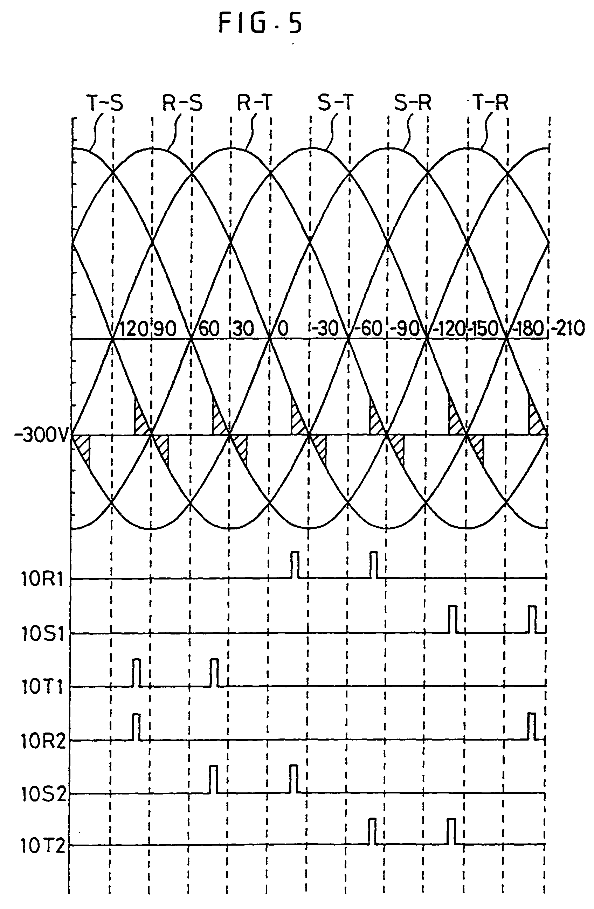

FIG. 5 is a diagram showing relation between the triggering of each thyristor and each interphase voltage in the regenerative mode. As seen in FIG. 5, at a point of -30 degrees, the R-S interphase voltage is -300 V. On the other hand, since the detected voltage Vdc (the charge voltage of the capacitor C) has exceeded the command voltage Vcmd = 300V, the voltage Vdc is reversed by turning on the switching devices T1, T2, and a voltage whose absolute value is larger than the absolute value of -300 V is applied across the R phase terminal and the S phase terminal (In FIG. 5, a large negative value below -300 V). As a result, the current flows from the capacitor C to the switching device T1, the thyristor 10S2, the S phase terminal, the R phase terminal, the thyristor 10R1, the switching device T2 and the capacitor C. Thus, the capacitor C is discharged, and the charge voltage Vdc thereof is dropped.

From the next period, the processor obtains the voltage deviation Vε in Step S1, and when the voltage deviation Vε is negative (Step S2), the processor judges whether the flag F is "1" or not (Step S10). Since the flag F has been set to "1" to indicate the regenerative mode in Step 15, the processor goes to Step S11 and reverses the sign of the voltage deviation Vε obtained in Step S1. (In this case, the voltage deviation Vε turns to a positive value.)

Then, the voltage deviation Vε whose sign has been thus reversed is accumulated in the accumulator A (Step S4). Since the sign of the value memorized in the accumulator A has been reversed in Step S16 and the accumulator now memorizes a negative value, when the voltage deviation Vε which is positive is accumulated in the accumulator, the accumulator shows a negative value whose absolute value is decreased. Then, a value obtained by multiplying the value in the accumulator A by the integral gain K2 is added to a value obtained by multiplying the voltage deviation Vε by the proportional gain K1 to thereby obtain the current command Icmd (Step S5). Since the value in the accumulator A is negative and the voltage deviation Vε has been changed to a positive value in Step S11, the now obtained current command Icm is a negative value whose absolute value is smaller than the absolute value of the current command obtained in the preceding period.

The detected current Idc is subtracted from the obtained current command Icmd to thereby obtain the current deviation Iε (Step S6). The now obtained current deviation Iε is a negative value whose absolute value is smaller than the absolute value of the current deviation obtained in the preceding period. The current deviation Iε is multiplied by the current gain K3 to obtain a basic electrical angle θ (Step S7). The obtained electrical angle θ is stored in the register R and outputted (Steps S8, S9). Thus, the processing in the present period ends. Since the current deviation Iε obtained in the present period is a negative value whose absolute value is smaller than the absolute value of the current deviation obtained in the preceding period, the now obtained electrical angle θ is a negative value whose absolute value is smaller than the absolute value of the electrical angle θ obtained in the preceding period.

Based on the thus obtained electrical angle θ and the phases of the power source detected by the phase detecting circuit 15, a thyristor triggering command for each phase is outputted by the gate array circuit to the thyristor triggering circuit 14 as in conventional cases, and the thyristor triggering circuit 14 triggers each thyristor based on each triggering command.

Then, as long as the voltage deviation Vε is negative, processing in Steps S1, S2, S10, S11, S4 to S9 is performed, repeatedly.

FIG. 5 shows relation between the triggering timing for each thyristor and the output DC voltage (the command voltage Vcmd) at the time the detected DC voltage Vdc is higher than the command voltage Vcmd and the regenerative mode is going on.

By turning on the switching devices T1, T2, the capacitor C is connected to the power source with a polarity reverse to that in the power running mode. Therefore, unlike the case shown in FIG. 4, the thyristors are triggered when each interphase voltage of the power source is negative. In a state where the thyristors are triggered at an electrical angle θ a little larger than 30 degrees in the above described power running mode and the output voltage maintains the command voltage Vcmd, when the detected voltage Vdc becomes higher than the command voltage Vcmd (= 300V), the voltage deviation Vε turns negative. Therefore, the switching devices T1, T2 are turned on in Step S17, and the command electrical angle θ is turned to a negative value (whose absolute value is a little smaller than the absolute value of θ = -30 degrees). From this time, a negative value whose absolute value is smaller than 30 degrees is outputted as the command electrical angle θ by the processing described above, so that the thyristors 10R1, 10S2 are triggered at the time the basic R-S interphase voltage takes a negative value whose absolute value is smaller than the absolute value of the command voltage Vcmd (= -300 V). Thus, the electrical power stored in the capacitor C is fed back through the thyristors 10R1, 10S2 to the power source.

After that, at each point which is 60 degrees behind the preceding point, the thyristors 10R1, 10T2, the thyristors 10S1, 10T2, the thyristors 10S1, 10R2, the thyristors 10T1, 10R2, the thyristors 10T1 and 10S2 and the thyristors 10R1, 10S2 ...... are successively triggered, and the electrical power stored in the capacitor C is successively fed back to the power source.

Power regeneration is performed as described above. When the detected voltage Vdc drops to the command voltage or under and the voltage deviation Vε is judged to be "0" or over in Step S2, then whether the flag F is "0" or not is judged in Step S3. If the processing in the preceding period has been in the regenerative mode, the flag F has been set to "1". Therefore, the processor goes to Step S12 and sets the flag to "0". Then, the processor reverses the sign of the value memorized in the accumulator A, turns off the switching devices T1, T2 to thereby change the mode to the power running mode (Steps S13, S14), reverses the sign of the command electrical angle θ stored in the register R (Step S18), outputs the command electrical angle θ stored in the register R (Step S9), and then performs the above described processing in the power running mode.

According to the present invention, DC voltage lower than the voltage of an AC power source can be obtained without using a transformer, and in addition, regenerative energy can be fed back to the power source.

## Claims

1. A transforming converter for converting a source voltage of an AC power source to a reduced DC voltage, comprising:
a thyristor bridge circuit; and
control means for performing a phase-angle control of said thyristor bridge circuit so that said source voltage is converted to a DC voltage of a set value,
wherein said control means performs the phase-angle control of said thyristor bridge circuit so that regenerative energy is successively fed back to phases of interphase voltages of said AC power source, which have values lower than said set value, when said DC voltage exceeds said set value due to the regenerative energy.

2. A transforming converter according to claim 1, wherein said control means obtains a command electrical angle for said phase-angle control so that said DC voltage maintains said set value, using a detected value of said DC voltage and a detected value of an electric current flowing in said thyristor bridge circuit.

3. A transforming converter for converting a source voltage of an AC power source to a reduced DC voltage, comprising:
a thyristor bridge circuit;
a smoothing capacitor connected between a positive terminal and a negative terminal of said thyristor bridge circuit through two diodes respectively interposed in a current-flow allowing direction;
switching devices respectively connected between cathodes of said two diodes and between anodes of said two diodes; and
control means for controlling said thyristor bridge circuit and said switching devices,
wherein in the process of power running said control means turns off said switching devices and performs the phase-angle control of said thyristor bridge circuit so that a voltage between two terminals of said smoothing capacitor is maintained at a DC voltage of a set value, and in the process of regenerating said control means turns on said switching devices and performs the phase-angle control of said thyristor bridge circuit so that regenerative energy is successively fed back to phases of interphase voltages of said AC power source, which have values lower than said set value.

4. A transforming converter according to claim 3, wherein said control means controls a command electrical angle for said phase-angle control so that said DC voltage is maintained at said set value, using a detected value of the DC voltage between two terminals of said smoothing capacitor and a detected value of an electric current flowing between said thyristor bridge circuit and said smoothing capacitor.

5. A transforming converter according to claim 4, wherein said control means obtains a deviation of a detected value of the DC voltage between two terminals of said smoothing capacitor from the set value of the DC voltage, obtains an electric current command by proportional-plus-integral control, and obtains an electrical-angle command for said phase-angle control based on a difference between said electric current command and a detected value of the electric current flowing between said thyristor bridge circuit and said smoothing capacitor.

6. A transforming converter according to any one of claims 3 to 5, wherein said control means includes a thyristor triggering circuit for selectively triggering thyristors in said thyristor bridge circuit, a controller for controlling a triggering operation of said thyristor triggering circuit and a switch driving circuit for controlling said switching devices.
